# EUROPÄISCHE PATENTSCHRIFT

(11) **EP 1 051 896 B1**
(45) Veröffentlichungstag und Bekanntmachung des Hinweises auf die Patenterteilung: **04.08.2004**
(21) Anmeldenummer: 00109670.0
(22) Anmeldetag: 06.05.2000
(51) Int. Cl.: A01C 5/06, A01C 7/20

(54) **Säschar**
Drill coulter
Soc de semoir

(30) Priorität: 12.05.1999 US 310541
(43) Veröffentlichungstag der Anmeldung: 15.11.2000
(73) Patentinhaber: DEERE & COMPANY, Moline, Illinois 61265-8098 (US)
(72) Erfinder: Wodrich, Timothy Dirk, Rock Island, IL 61201 (US)
(74) Vertreter: Holst, Sönke, Dr.

(56) Entgegenhaltungen:
- EP-A- 0 898 860
- BE-A- 352 993
- DE-A- 4 039 966

## Beschreibung

Die Erfindung betrifft ein Säschar für eine Sämaschine, mit einem oberen Teil, der eingerichtet ist, an ein Saatgutzuführrohr gekoppelt zu werden und einen oberen Saatgutkanal aufweist, und mit einem unteren Teil, der am oberen Teil fixierbar und mit einem unteren Saatgutkanal versehen ist, der sich an den oberen Saatgutkanal anschließt und eingerichtet ist, vom oberen Teil Saatgut zu empfangen.

Drillmaschinen und pneumatische Sämaschinen sind Sämaschinen zum Einbringen festen Saatguts in den Erdboden. Im konkreten sind die Saatreihen recht nahe aneinander angeordnet. Das Saatgut wird in einem großen Vorratsbehälter bereitgehalten, der eine Mehrzahl an Saatgutmeßsystemen versorgt. Jeder Pflanzeinheit ist ein einzelnes Meßsystem zugeordnet. Das Meßsystem führt wiederum abgemessenes Saatgut durch ein Saatgutzufuhrrohr einem Säschar mit einem Saatgutkanal zu. Das Säschar ist einem Furchenöffner zugeordnet, der eine Säfurche erstellt. Das Säschar leitet das Saatgut in die Säfurche, die durch ein Schließrad geschlossen wird.

Deere & Company, die Anmelderin der vorliegenden Patentanmeldung, stellt derzeit eine Drillmaschine der Serie 1560 her und vertreibt sie. Diese Drillmaschine ist mit einem Furchenöffner mit einer einzelnen Scheibe und einem Säschar, das aus einem einzigen Gußteil besteht, ausgestattet. Der Furchenöffner öffnet eine Säfurche, wobei das Säschar die Säfurche offen hält, während die Saat in sie eingebracht wird. Der untere Teil des Säschars ist während des Sävorgangs fortdauernd mit dem Erdboden im Kontakt und daher einer relativ zum oberen Bereich des Säschars erhöhten Abnutzung ausgesetzt. Wenn der untere Bereich des Säschars vollständig abgenutzt ist, muß der Landwirt das ganze Gußteil des Säschars ersetzen.

Bei pneumatischen Sämaschinen wird ein Luftstrom benutzt, das abgemessene Saatgut und Dünger einer Pflanzeinheit zuzuführen. Bei einigen von Deere & Company hergestellten und vertriebenen pneumatischen Sämaschinen ist die Pflanzeinheit fast mit der Pflanzeinheit der Drillmaschinen der Serie 1560 identisch.

In der EP 0 898 860 A wird ein Normalsäschar für eine Sämaschine beschrieben, das sich aus einem Scharkörper und einer an der Vorderseite des Scharkörpers befestigten Scharspitze zusammensetzt. Das Saatgut gelangt durch den Scharkörper in die von der Scharspitze erzeugte Saatgutfurche und wird durch eine an der Rückseite des Scharkörpers befestigte Andrückeinrichtung in die Furche gedrückt. Ein Austausch der Andrückeinrichtung erscheint problematisch.

Die BE 352 993 A zeigt ein anderes Säschar, das sich aus einem Scharkörper mit einem Saatgutkanal und einem an der Unterseite des Scharkörpers befestigten Unterteil zusammensetzt, der sich an den Saatgutkanal anschließt. Es ist kein Mittel zum Andrücken des Saatguts in die Furche vorgesehen.

Die der Erfindung zugrunde liegende Aufgabe wird darin gesehen, ein verbessertes Säschar bereitzustellen, das die oben erwähnten Nachteile nicht aufweist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die vorliegende Erfindung schlägt ein Säschar vor, das einen oberen Teil aufweist, der am Saatgutzuführrohr befestigt ist, und einen unteren Teil, welcher mit dem oberen Teil lösbar gekoppelt ist. Vorzugsweise sind der untere und/oder der obere Teil des Säschars Gußteile. Der obere Teil ist mit einem oberen Saatgutkanal versehen, um abgemessenes Saatgut vom Saatgutzuführrohr zu empfangen und es in den unteren Teil weiterzuleiten. Der untere Teil ist mit einem unteren Saatgutkanal ausgestattet, um Saatgut vom oberen Saatgutkanal zu empfangen und es in die vom Furchenöffner erstellte Säfurche abzulegen, die vom Säschar aufrechterhalten wird. Eine Zunge zum Andrücken von Saatgut an den Boden der Säfurche erstreckt sich am unteren Teil nach hinten und unten hinter dem unteren Saatgutkanal, um sicherzustellen, dass das Saatgut in der Säfurche verbleibt. Der obere Bereich der Zunge ist in eine Einbuchtung eingeklemmt, die sich zwischen dem unteren und dem oberen Teil befindet.

Vorzugsweise der hintere Teil sowohl des oberen Teils als auch des unteren Teils können mit miteinander ausgerichteten Befestigungslöchern versehen sein, die zur Aufnahme eines Befestigungsbolzens - insbesondere einer Befestigungsschraube - eingerichtet sind, der dazu dient, den unteren Teil am oberen Teil zu befestigen.

Die vorlaufenden Seiten des oberen Teils und/oder des unteren Teils sind vorzugsweise mit einer vorlaufenden Kante versehen, die sich nach hinten und unten erstreckt, und eventuell in der Säfurche liegende Bodenreste zur Seite räumt. In der Regel ist die Kante des oberen Teils mit der Kante des unteren Teils ausgerichtet, um keine Fugen zu bilden, in denen sich Bodenreste ansammeln können.

Der untere Teil und/oder der obere Teil können seitliche, der Säfurche zugewandte Oberflächen aufweisen, die sich im seitlichen Kontakt mit der Säfurche befinden. Diese Oberflächen verhindern, dass Teile des Erdbodens in die Säfurche fallen.

Vorzugsweise ist der vordere Bereich des unteren Teils mit einem sich nach vorn und oben erstreckenden ersten Befestigungsfortsatz versehen, der in eine im vorderen Bereich des oberen Teils eingebrachte Einbuchtung eingreift. Die der Säfurche zugewandte - d. h. nach hinten weisende - Seite des unteren Teils kann außerdem mit einem zweiten Befestigungsfortsatz ausgestattet sein, der sich nach oben erstreckt und in eine Ausbuchtung an der der Säfurche zugewandten Seite des oberen Teils eingreift. Denkbar wäre selbstverständlich auch, den ersten und/oder zweiten Befestigungsfortsatz am oberen Teil anzuordnen und die zugehörige Einbuchtung am unteren Teil vorzusehen.

Der obere Teil kann mittels eines Befestigungsbügels am Saatgutzuführrohr befestigt werden. Dabei können ein Band und/oder ein Stift zur Fixierung des Saatgutzuführrohres dienen.

In den Zeichnungen ist ein nachfolgend näher beschriebenes Ausführungsbeispiel der Erfindung dargestellt. Es zeigt:
- Fig. 1: eine perspektivische Ansicht einer einzelnen Säeinheit einer Sämaschine,
- Fig. 2: eine von der Seite der Säfurche aus betrachtete perspektivische Seitenansicht des Säschars und des Saatgutzuführrohrs,
- Fig. 3: eine von der Seite der Säfurche aus betrachtete perspektivische Ansicht des Säschars und des Saatgutzuführrohrs, und
- Fig. 4: eine von der Seite des Furchenöffners aus betrachtete perspektische Ansicht des Säschars und des Saatgutzuführrohrs.

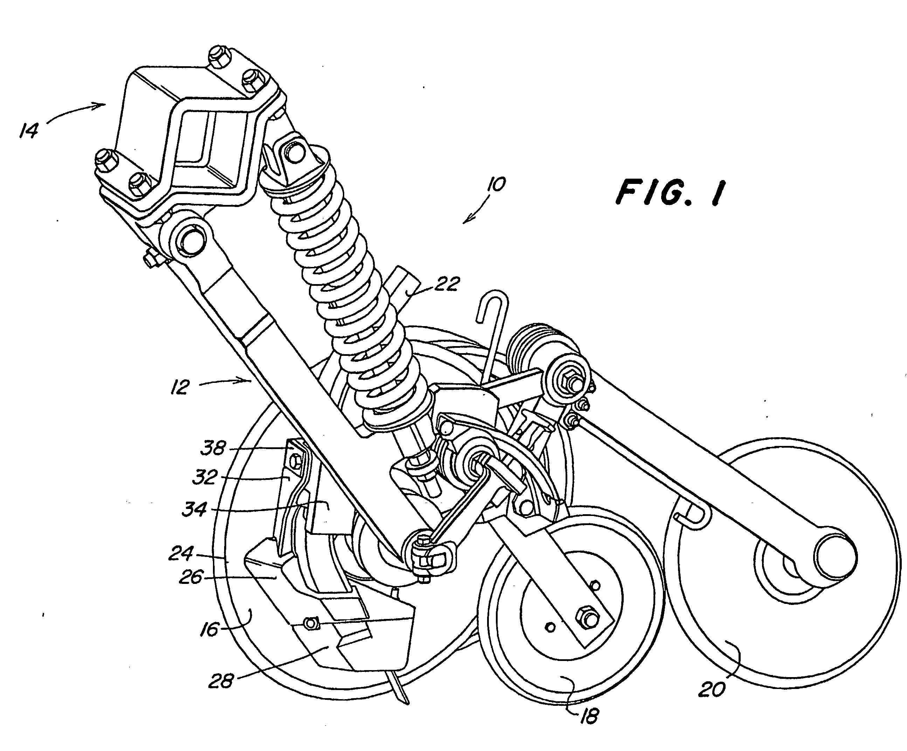

Figur 1 zeigt eine einzelne Säeinheit 10 einer Sämaschine. Die Säeinheit 10 hat einen schwenkbaren Rahmen 12, der durch eine Klemmeinrichtung 14 an der Sämaschine befestigt ist. Ein Furchenöffner 16 mit einer einzelnen Scheibe ist drehbar an den Rahmen 12 gekoppelt. Der Furchenöffner 16 erstellt eine Säfurche, in die abgemessenes Saatgut abgelegt wird. Ein Andrückrad 18 für Saatgut ist drehbar mit dem Rahmen 12 gekoppelt und hinter dem Furchenöffner 16 angeordnet, um Saatgut in die Säfurche zu drücken. Unmittelbar hinter dem Andrückrad 18 ist das Schließrad 20 angeordnet, das die Säfurche zusammendrückt und das Saatgut mit einer losen Erdbodenschicht bedeckt.

Abgemessenes Saatgut von der Sämaschine wird einem Saatgutzuführrohr 22 zugeführt, das es nach unten in das Säschar 24 leitet. Das Säschar 24 umfaßt einen oberen gegossenen Teil 26 und einen unteren gegossenen Teil 28. Der obere Teil 26 umfaßt einen Gußkörper mit einem oberen Saatgutkanal 30 zum Aufnehmen von Saatgut aus dem Saatgutzuführrohr 22. Dieser Saatgutkanal 30 erstreckt sich nach unten und nach hinten. Der obere Teil 26 ist außerdem mit einem integrierten Befestigungsbügel 32 ausgestattet, der miteinander ausgerichtete Löcher aufweist, die zur Aufnahme eines Stiftes 36 und eines Bandes 38 zur Befestigung des oberen Teils 26 am Saatgutzuführrohr 22 und am Rahmen 12 eingerichtet sind. Der Rahmen 12 ist mit einer U-förmigen Befestigungsklammer 34 versehen, die zwischen den Befestigungsbügel 32 und das Saatgutzuführrohr 22 passt. Der obere Teil 26 ist außerdem mit einem sich nach oben erstreckenden Fortsatz 40 versehen, der an der Seitenwand 42 des Saatgutzuführrohrs 22 anliegt.

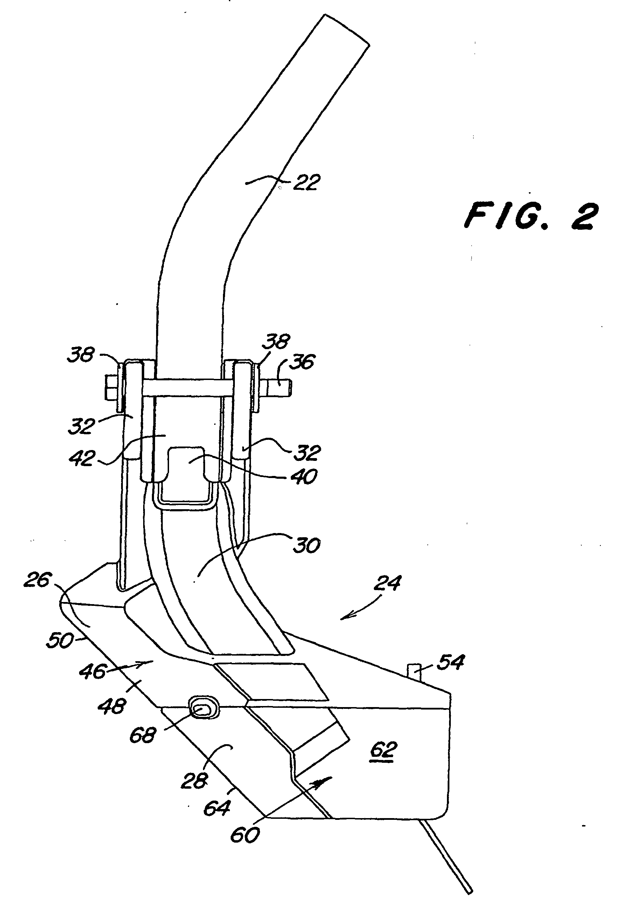

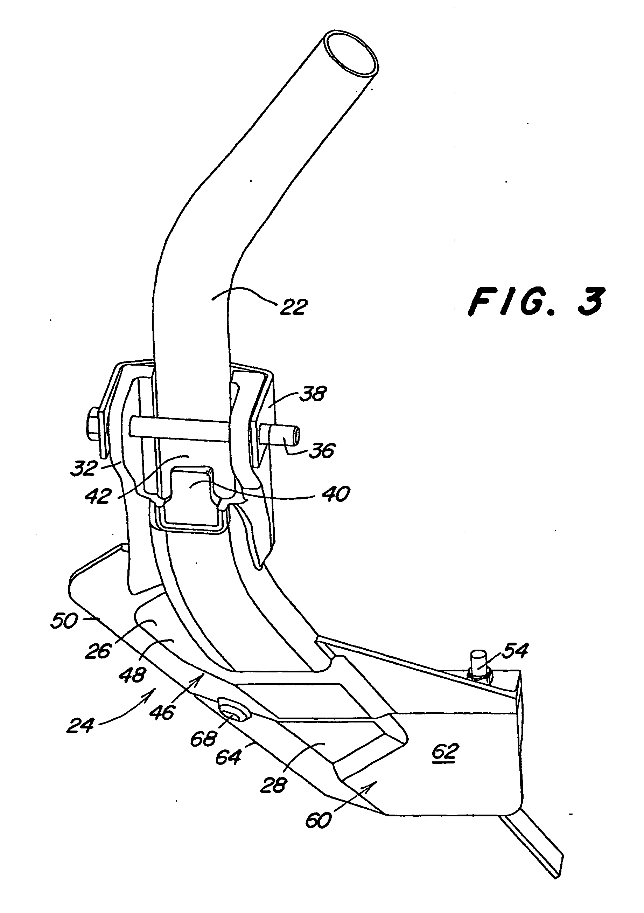

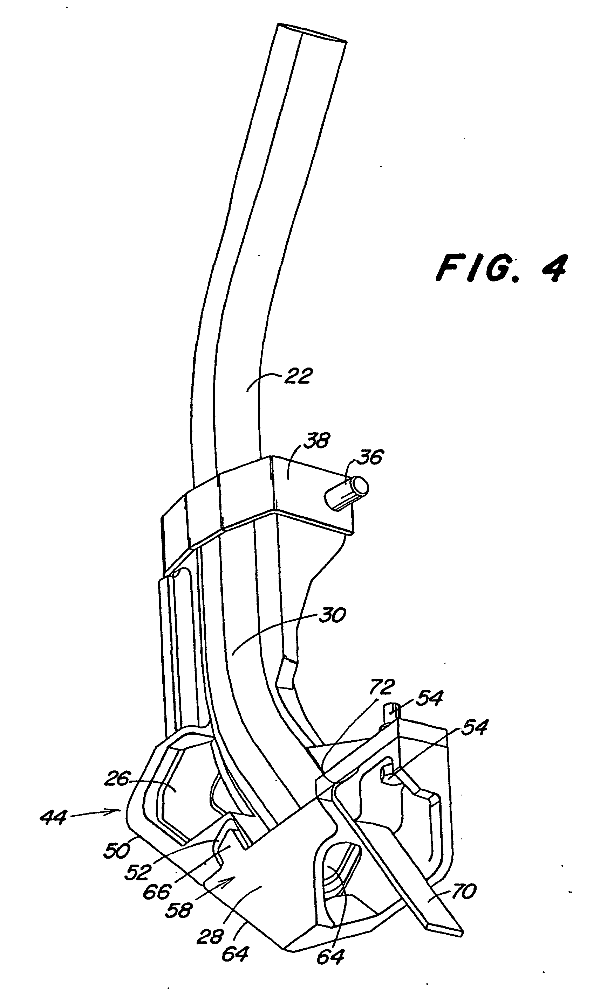

Der obere Teil 26 hat eine in Figur 4 dargestellte Seite 44, die dem Furchenöffner 16 zugewandt ist, und eine der Säfurche zugewandte Seite 46, die in den Figuren 1 bis 3 wiedergegeben ist. Die der Säfurche zugewandte Seite 46 ist mit einer Oberfläche 48 ausgestattet, die eingerichtet ist, mit den Seitenwänden der vom Furchenöffner 16 geöffneten Säfurche im Eingriff zu stehen, und die Säfurche offen zu halten, während das Saatgut in der Säfurche abgelegt wird. Der obere Teil 26 ist außerdem an der dem Furchenöffner 16 zugewandten Seite 44 mit einer vorlaufenden Kante 50 versehen, die bis in die Nähe der inneren Oberfläche des Furchenöffners 16 vorspringt, und sich nach unten und hinten erstreckt. Eine Einbuchtung 52 zur Aufnahme eines Befestigungsfortsatzes ist hinter der vorlaufenden Kante 50 an der dem Furchenöffner 16 zugewandten Seite 44 des oberen Teils 26 angeordnet. Die Rückseite des oberen Teils 26 ist mit einem Befestigungsloch zur Aufnahme eines Befestigungsbolzens 54 versehen.

Der untere Teil 28 hat ebenfalls eine dem Furchenöffner 16 zugewandte Seite 58, die in Figur 4 dargestellt ist, und eine in den Figuren 1 bis 3 wiedergegebene, der Säfurche zugewandte Seite 60. Die der Säfurche zugewandte Seite 60 ist mit einer Oberfläche 62 versehen, die eingerichtet ist, die vom Furchenöffner 16 hergestellte Säfurche offen zu halten. Der untere Teil 28 ist mit einem unteren Saatgutkanal versehen, der mit dem oberen Saatgutkanal 30 des oberen Teils 26 ausgerichtet ist. Zusätzlich ist die obere vorlaufende Kante 50 mit einer unteren vorlaufenden Kante 64 ausgerichtet, die sich ebenfalls nach unten und hinten erstreckt. Die Rückseite des unteren Teils 28 ist mit einem Befestigungsloch versehen, das mit dem oberen Befestigungsloch zur Aufnahme des Befestigungsbolzens 54 ausgerichtet ist.

Die Vorderseite des unteren Teils 28 vor dem Saatgutkanal ist mit einem ersten Befestigungsfortsatz 66 versehen, der sich nach oben und vorn erstreckt und in der Einbuchtung 52 des oberen Teils 26 aufgenommen ist. Ein zweiter Befestigungsfortsatz 68 erstreckt sich ebenfalls vom unteren Teil 28 nach oben und liegt an der Oberfläche 48 auf der der Säfurche zugewandten Seite des oberen Teils 26 an.

Eine saatgutandrückende Zunge 70 aus Kunststoff erstreckt sich vom unteren Saatgutkanal nach hinten und unten. Es wird zwischen dem oberen Teil 26 und dem unteren Teil 28 festgehalten und in einer Einbuchtung 72 im unteren Teil 28 fixiert.

## Patentansprüche

1. Säschar (24) für eine Sämaschine, mit einem oberen Teil (26), der eingerichtet ist, an ein Saatgutzuführrohr (22) gekoppelt zu werden und einen oberen Saatgutkanal (30) aufweist, und mit einem unteren Teil (28), der am oberen Teil (26) fixierbar und mit einem unteren Saatgutkanal versehen ist, der sich an den oberen Saatgutkanal (30) anschließt und eingerichtet ist, vom oberen Teil (26) Saatgut zu empfangen, **dadurch gekennzeichnet, dass** der untere Teil (28) mit einer dem oberen Teil (26) benachbarten Einbuchtung (72) versehen ist, die eine saatgutandrückende Zunge (70) aufnimmt, die sich nach hinten und unten hinter dem unteren Saatgutkanal erstreckt, wobei die Zunge (70) zwischen dem oberen Teil (26) und dem unteren Teil (28) eingeklemmt ist.

2. Säschar (24) nach Anspruch 1, **dadurch gekennzeichnet, dass** der obere Teil (26) und/oder der untere Teil (28) gegossen sind.

3. Säschar (24) nach Anspruch 1 oder 2, **dadurch gekennzeichnet, dass** der obere Teil (26) und der untere Teil (28) mit zueinander ausgerichteten Befestigungslöchern versehen sind, durch die ein Befestigungsbolzen (54) einführbar ist, um den unteren Teil (26) und den oberen Teil (28) aneinander zu befestigen.

4. Säschar (24) nach einem der vorhergehenden Ansprüche, **dadurch gekennzeichnet, dass** der obere Teil (26) mit einer oberen vorlaufenden Kante (50) versehen ist, die sich nach hinten und unten erstreckt und/oder dass der untere Teil (28) mit einer unteren vorlaufenden Kante (64) versehen ist, die sich nach unten und hinten erstreckt, und vorzugsweise mit der oberen vorlaufenden Kante (50) ausgerichtet ist.

5. Säschar (24) nach einem der vorhergehenden Ansprüche, **dadurch gekennzeichnet, dass** der obere Teil (26) eine obere, einem Furchenöffner (16) zugewandte Seite (44) und eine obere, einer Säfurche zugewandte Seite (46) aufweist, und dass die obere, der Säfurche zugewandte Seite (46) eine obere seitliche Oberfläche (48) aufweist, die mit einer von einem Furchenöffner (16) erstellten Säfurche im Kontakt steht, um die Säfurche offen zu halten.

6. Säschar (24) nach einem der vorhergehenden Ansprüche, **dadurch gekennzeichnet, dass** der untere Teil (28) eine untere, einem Furchenöffner (16) zugewandte Seite (58) und eine untere, einer Säfurche zugewandte Seite (60) aufweist, und dass die untere, der Säfurche zugewandte Seite (60) mit einer unteren seitlichen Oberfläche (62) versehen ist, die sich im Kontakt mit der vom Furchenöffner (16) geöffneten Säfurche befindet, um die Säfurche offen zu halten.

7. Säschar (24) nach einem der vorhergehenden Ansprüche, **dadurch gekennzeichnet, dass** eine einem Furchenöffner (16) zugewandte Seite (44) des oberen Teils (26) mit einer sich nach oben und vorn erstreckenden Einbuchtung (52) versehen ist, die eingerichtet ist, einen ersten Befestigungsfortsatz (66) aufzunehmen, der sich vom unteren Teil (28) nach oben und vorn erstreckt.

8. Säschar (24) nach einem der vorhergehenden Ansprüche, **dadurch gekennzeichnet, dass** der untere Teil (28) mit einem zweiten Befestigungsfortsatz (68) versehen ist, der sich vom unteren Teil (28) nach oben erstreckt, und an der der Säfurche zugewandten Seite (46) des oberen Teils (26) anliegt.

9. Säschar (24) nach einem der vorhergehenden Ansprüche, **dadurch gekennzeichnet, dass** der obere Teil (26) mit einem sich nach oben erstreckenden Befestigungsbügel (32) ausgestattet ist, der zur Aufnahme eines Saatgutzuführrohres (22) eingerichtet ist, und dass der Befestigungsbügel (32) mit einem Band (38) und/oder einem Stift (36) versehen ist, um den oberen Teil (26) am Saatgutzuführrohr (22) zu fixieren.

10. Säschar (24) nach einem der vorhergehenden Ansprüche, **dadurch gekennzeichnet, dass** der obere Teil (26) mit einem sich nach oben erstreckenden Fortsatz (40) versehen ist, der an einer Seitenwand (42) des Saatgutzuführrohres (22) in Anlage bringbar ist.

11. Unterer Teil (28) für ein Säschar (24) nach einem der vorhergehenden Ansprüche.

## Claims

1. Seed boot (24) for a seeding machine, with an upper portion (26), which is adapted to be coupled to a seed delivery tube (22) and has an upper seed passage (30), and with a lower portion (28), which may be fixed to the upper portion (26) and is provided with a lower seed passage, which adjoins the upper seed passage (30) and is adapted to receive seed from the upper portion (26), **characterised in that** the lower portion (28) is provided with a recess (72) adjacent to the upper portion (26), said recess receiving a seed retaining tongue (70), which extends to the rear and downwards behind the lower seed passage, wherein the tongue (70) is clamped between the upper portion (26) and the lower portion (28).

2. Seed boot (24) according to Claim 1, **characterised in that** the upper portion (26) and/or the lower portion (28) are cast.

3. Seed boot (24) according to Claim 1 or 2, **characterised in that** the upper portion (26) and the lower portion (28) are provided with mutually aligned mounting holes, through which a mounting bolt (54) may be inserted in order to fasten the lower portion (26) and the upper portion (28) to one another.

4. Seed boot (24) according to one of the preceding claims, **characterised in that** the upper portion (26) is provided with an upper leading edge (50), which extends to the rear and downwards, and/or that the lower portion (28) is provided with a lower leading edge (64), which extends downwards and to the rear and is preferably aligned with the upper leading edge (50).

5. Seed boot (24) according to one of the preceding claims, **characterised in that** the upper portion (26) has an upper side (44) facing a furrow opener (16) and an upper side (46) facing a planting furrow, and that the upper side (46) facing the planting furrow has an upper lateral surface (48), which is in contact with a planting furrow formed by a furrow opener (16) in order to keep the planting furrow open.

6. Seed boot (24) according to one of the preceding claims, **characterised in that** the lower portion (28) has a lower side (58) facing a furrow opener (16) and a lower side (60) facing a planting furrow, and that the lower side (60) facing the planting furrow is provided with a lower lateral surface (62), which is in contact with the planting furrow opened by the furrow opener (16) in order to keep the planting furrow open.

7. Seed boot (24) according to one of the preceding claims, **characterised in that** a side (44) of the upper portion (26) facing a furrow opener (16) is provided with an upwardly and forwardly extending recess (52), which is adapted to receive a first mounting lug (66), which extends upwards and forwards from the lower portion (28).

8. Seed boot (24) according to one of the preceding claims, **characterised in that** the lower portion (28) is provided with a second mounting lug (68), which extends upwards from the lower portion (28) and abuts against the side (46) of the upper portion (26) facing the planting furrow.

9. Seed boot (24) according to one of the preceding claims, **characterised in that** the upper portion (26) is provided with an upwardly extending mounting clevis (32), which is adapted to receive a seed delivery tube (22), and that the mounting clevis (32) is provided with a strap (38) and/or a pin (36) in order to fix the upper portion (26) to the seed delivery tube (22).

10. Seed boot (24) according to one of the preceding claims, **characterised in that** the upper portion (26) is provided with an upwardly extending lug (40), which may be brought into abutment against a side wall (42) of the seed delivery tube (22).

11. Lower portion (28) for a seed boot (24) according to one of the preceding claims.

## Revendications

1. Soc de semoir (24) pour un semoir, avec une partie supérieure (26), qui est agencée pour être accouplée à un tuyau d'alimentation de semences (22) et qui comporte un conduit supérieur pour semences (30), et avec une partie inférieure (28) qui peut être fixée à la partie supérieure (26) et qui comporte un conduit inférieur pour semences qui est raccordé au conduit supérieur pour semences (30) et qui est agencée pour recevoir des semences de la partie supérieure (26), **caractérisé en ce que** la partie inférieure (28) est muni d'une indentation (72) adjacente à la partie supérieure (26) dans laquelle est logée une languette pressant les semences qui s'étend vers l'arrière et vers le bas derrière le conduit inférieur pour semences, la languette (70) étant serrée entre la partie supérieure (26) et la partie inférieure (28).

2. Soc de semoir (24) selon la revendication 1, **caractérisé en ce que** la partie supérieure (26) et/ou la partie inférieure (28) sont coulées.

3. Soc de semoir (24) selon la revendication 1 ou 2, **caractérisé en ce que** la partie supérieure (26) et la partie inférieure (28) sont munies de trous de fixation alignés les uns sur les autres, à travers lesquels on peut introduire un boulon de fixation (54) afin de fixer la partie inférieure (26) et la partie supérieure (28).

4. Soc de semoir (24) selon l'une quelconque des revendications précédentes, **caractérisé en ce que** la partie supérieure (26) est munie d'une arête supérieure (50) allant vers l'avant qui s'étend vers l'arrière et vers le bas et/ou **en ce que** la partie inférieure (28) est munie d'une arête inférieure (64) allant vers l'avant qui s'étend vers le bas et vers l'arrière et qui est, de préférence, alignée sur l'arête supérieure (50) allant vers l'avant.

5. Soc de semoir (24) selon l'une quelconque des revendications précédentes, **caractérisé en ce que** la partie supérieure (26) comporte un côté supérieur (44) tourné vers un soc de semoir (16) et un côté supérieur (46) tourné vers un sillon de semoir, et **en ce que** le un côté supérieur (46) tourné vers le sillon de semoir comporte une surface latérale supérieure (48) qui est en contact avec un sillon de semoir élaboré par un soc de semoir (16) afin de maintenir le sillon de semoir ouvert.

6. Soc de semoir (24) selon l'une quelconque des revendications précédentes, **caractérisé en ce que** la partie inférieure (28) comporte un côté inférieur (58) tourné vers un soc de semoir (16) et un côté inférieur (60) tourné vers un sillon de semoir, et **en ce que** le un côté inférieur (60) tourné vers le sillon de semoir est munie d'une surface latérale inférieure (62) qui se trouve en contact avec le sillon de semoir ouvert par le soc de semoir (16) afin de maintenir le sillon de semoir ouvert.

7. Soc de semoir (24) selon l'une quelconque des revendications précédentes, **caractérisé en ce qu'**un côté (44) tourné vers un soc de semoir (16) de la partie supérieure (26) est muni d'une indentation (52) s'étendant vers le haut et vers l'avant qui est agencée pour loger une première allonge de fixation (66) qui s'étend vers le haut et vers l'avant à partir de la partie inférieure (28).

8. Soc de semoir (24) selon l'une quelconque des revendications précédentes, **caractérisé en ce que** la partie inférieure (28) est munie d'une seconde allonge de fixation (68) qui s'étend vers le haut à partir de la partie inférieure (28) et qui s'appuie sur le côté (46) de la partie supérieure (26) tourné vers le sillon de semoir.

9. Soc de semoir (24) selon l'une quelconque des revendications précédentes, **caractérisé en ce que** la partie supérieure (26) est équipée d'un étrier de fixation (32) s'étendant vers le haut qui est agencé pour le logement d'un tuyau d'alimentation de semences (22) et **en ce que** l'étrier de fixation (32) est muni d'une bande (38) et/ou une goupille (36) pour fixer la partie supérieure (26) au tuyau d'alimentation de semences (22).

10. Soc de semoir (24) selon l'une quelconque des revendications précédentes, **caractérisé en ce que** la partie supérieure (26) est équipée d'une allonge (40) s'étendant vers le haut qui peut être mise en appui contre une paroi latérale (42) du tuyau d'alimentation de semences (22).

11. Partie inférieure (28) pour un soc de semoir (24) selon l'une quelconque des revendications précédentes.
